# EUROPEAN PATENT APPLICATION

(11) **EP 4 628 208 A1**
(43) Date of publication of application: **08.10.2025**
(21) Application number: 23897370.5
(22) Date of filing: 02.11.2023
(51) Int. Cl.: B01J 21/18, B01J 35/60, B01J 35/77, C25B 11/052, C25B 11/075, H01M 4/90, H01M 8/10, H01M 12/06, H01M 12/08

(54) **CARBON CATALYST, ELECTRODE, AND BATTERY**

(30) Priority: 29.11.2022 JP 2022189815
(71) Applicant: Nisshinbo Holdings Inc., Tokyo 103-8650 (JP); National University Corporation Gunma University, Maebashi-shi, Gunma 371-8510 (JP)
(72) Inventor: KUBOTA, Yuji, Chiba-shi, Chiba 267-0056 (JP); MAIE, Takuya, Chiba-shi, Chiba 267-0056 (JP); OZAKI, Jun-ichi, Maebashi-shi, Gunma 371-8510 (JP); KAMEYAMA, Rieko, Maebashi-shi, Gunma 371-8510 (JP); ISHII, Takafumi, Maebashi-shi, Gunma 371-8510 (JP)
(74) Representative: Vossius & Partner Patentanwälte Rechtsanwälte mbB
(86) International application number: PCT/JP2023/039593
(87) International publication number: WO 2024/116715

(57) **Abstract**

Provided are a carbon catalyst that exhibits high catalytic activity, an electrode, and a battery. The carbon catalyst has a ratio L/La of an average carbon network plane size L, which is obtained by temperature programmed desorption analysis capable of heating to 1,600°C, to a crystallite size La, which is obtained from a diffraction peak in a vicinity of a diffraction angle (2θ) of 43° in an X-ray diffraction pattern obtained by powder X-ray diffraction using a CuKα ray, of 15 or more, and a BET specific surface area of 100 m²/g or more.

## Description

### Technical Field

The present invention relates to a carbon catalyst, an electrode, and a battery.

### Background Art

In Patent Literature 1, there is a description of a carbonaceous material that has a crystal structure having a spacing between <002> planes of from 3.40 Å to 3.60 Å, a crystallite size in a c-axis direction of from 15 Å to 150 Å, and a crystallite size in an a-axis direction of from 25 Å to 75 Å, each determined by wide angle X-ray analysis, has an intensity ratio (ID/IG) of a peak intensity (ID) in the vicinity of 1,360 cm⁻¹ to a peak intensity (IG) in the vicinity of 1,580 cm⁻¹ of from 0.2 to 2.0 in a spectrum obtained by laser Raman spectroscopy at an excitation wavelength of 532 nm, and has a Ti content of from 0.1 wt% to 30 wt% determined by ICP atomic emission spectrometry.

### Citation List

### Patent Literature

[PTL 1] JP 2018-123447 A

### Summary of Invention

### Technical Problem

Meanwhile, it has not yet been sufficiently clarified what carbon structure improves the catalytic activity of a carbon material.

The present invention has been made in view of the above-mentioned problems, and one of the objects of the present invention is to provide a carbon catalyst that exhibits high catalytic activity, an electrode, and a battery.

### Solution to Problem

[1] In order to achieve the above-mentioned object, according to one embodiment of the present invention, there is provided a carbon catalyst having a ratio L/La of an average carbon network plane size L, which is obtained by temperature programmed desorption analysis capable of heating to 1,600°C, to a crystallite size La, which is obtained from a diffraction peak in a vicinity of a diffraction angle (2θ) of 43° in an X-ray diffraction pattern obtained by powder X-ray diffraction using a CuKα ray, of 15 or more, the carbon catalyst having a BET specific surface area of 100 m²/g or more. According to the present invention, a carbon catalyst that exhibits high catalytic activity is provided.
[2] In the carbon catalyst according to the above-mentioned item [1], the crystallite size La may be 10.00 nm or less. [3] In the carbon catalyst according to the above-mentioned item [1] or [2], the average carbon network plane size L may be 5 nm or more. [4] The carbon catalyst according to any one of the above-mentioned items [1] to [3] may include a nitrogen atom. [5] The carbon catalyst according to any one of the above-mentioned items [1] to [4] may include a non-noble metal.
[6] In order to achieve the above-mentioned object, according to one embodiment of the present invention, there is provided an electrode including the carbon catalyst according to any one of the above-mentioned items [1] to [5]. According to the present invention, an electrode that exhibits high catalytic activity is provided.
[7] In order to achieve the above-mentioned object, according to one embodiment of the present invention, there is provided a battery including the electrode according to the above-mentioned item [6]. According to the present invention, a battery including the electrode that exhibits high catalytic activity is provided.

### Advantageous Effects of Invention

According to the present invention, a carbon catalyst that exhibits high catalytic activity, an electrode, and a battery, are provided.

### Brief Description of Drawings

FIG. 1 is an explanatory view for a coronene model regarding an average carbon network plane size L.
FIG. 2 is an explanatory diagram showing evaluation results of the characteristics of carbon catalysts in Examples according to an embodiment of the present invention.

### Description of Embodiments

One embodiment of the present invention will be described below. The present invention is not limited to examples described in the embodiment.

A carbon catalyst according to an embodiment of the present invention (hereinafter referred to as "catalyst of the present invention") is a carbon material which exhibits catalytic activity. The catalyst of the present invention mainly includes carbon. Specifically, the carbon content of the catalyst of the present invention may be, for example, 70 wt% or more, preferably 75 wt% or more, more preferably 80 wt% or more, and particularly preferably 85 wt% or more. The carbon content of the catalyst of the present invention may be, for example, 100 wt% or less, 95 wt% or less, or 90 wt% or less. The carbon content of the catalyst of the present invention may be specified by arbitrarily combining any one of the above-mentioned lower limit values and any one of the above-mentioned upper limit values. The carbon content of the carbon catalyst is obtained by elemental analysis (combustion method).

The catalyst of the present invention itself exhibits catalytic activity alone. That is, the catalyst of the present invention exhibits catalytic activity without including a noble metal supported thereon. The catalytic activity to be exhibited by the catalyst of the present invention is, for example, reduction reaction catalytic activity and/or oxidation reaction catalytic activity, more specifically oxygen reduction reaction catalytic activity and/or hydrogen oxidation reaction catalytic activity, and at least oxygen reduction reaction catalytic activity.

The inventors of the present invention have intensively investigated technical means for improving the catalytic activity of a carbon catalyst, and as a result, have uniquely found that a carbon catalyst having a carbon structure in which a ratio L/La of an average carbon network plane size L to a crystallite size La falls within a predetermined range exhibits high catalytic activity. Thus, the inventors have completed the present invention.

That is, the catalyst of the present invention has a ratio L/La of an average carbon network plane size L, which is obtained by temperature programmed desorption analysis capable of heating to 1,600°C, to a crystallite size La, which is obtained from a diffraction peak in a vicinity of a diffraction angle (2θ) of 43° in an X-ray diffraction pattern obtained by powder X-ray diffraction using a CuKα ray, of 15 or more.

The ratio L/La of the catalyst of the present invention is particularly preferably 16 or more. The upper limit value of the ratio L/La of the catalyst of the present invention is not particularly limited as long as the effects of the present invention are obtained. The upper limit value may be, for example, 12,500 or less, 10,000 or less, 5,000 or less, 1,000 or less, 700 or less, 500 or less, 300 or less, 200 or less, 100 or less, or 50 or less. The ratio L/La of the catalyst of the present invention may be specified by arbitrarily combining any one of the above-mentioned lower limit values and any one of the above-mentioned upper limit values.

The ratio L/La falling within the above-mentioned ranges contributes to improvement in catalytic activity of the catalyst of the present invention. That is, when the ratio L/La is equal to or higher than the above-mentioned lower limit value, for example, the carbon structure of the catalyst of the present invention includes a structure with appropriate planarity. Accordingly, an active structure included in the carbon structure is effectively increased. As a result, the catalytic activity of the catalyst of the present invention is effectively improved. On the other hand, when the ratio L/La is equal to or lower than the above-mentioned upper limit value, for example, a conductive path of electrons is effectively formed in the carbon structure, and hence the catalytic activity of the catalyst of the present invention is more effectively improved.

The crystallite size La of the carbon catalyst is obtained from the diffraction peak in the vicinity of a diffraction angle (2θ) of 43° in the X-ray diffraction pattern of the carbon catalyst obtained by powder X-ray diffraction using a CuKα ray. When the carbon catalyst has a structure in which carbon hexagonal network planes are connected to extend in an a-axis direction, among crystallites forming curved carbon network planes that contribute to its catalytic activity, a (10) diffraction line (hereinafter referred to as "diffraction peak f₁₀") of carbon having a peak top in the vicinity of a diffraction angle (2θ) of 43° (e.g., within the range of from 35° to 60°) appears in the X-ray diffraction pattern using a CuKα ray.

When the carbon catalyst includes iron as one transition metal, a diffraction peak derived from iron may appear in the vicinity of a diffraction angle (2θ) of 43°. That is, in this case, the (10) diffraction line of carbon is mixed with a diffraction line derived from iron (hereinafter referred to as "diffraction peak f_{Fe}") in a diffraction line derived from the carbon structure. Accordingly, with respect to the carbon catalyst including iron, the diffraction peak in the vicinity of a diffraction angle (2θ) of 43° is separated into two diffraction peaks, that is, f₁₀ and f_{Fe}, by such peak separation of X-ray diffraction data as performed in Examples described below.

Then, the crystallite size La is calculated by analyzing the diffraction peak f₁₀ obtained by the peak separation described above. That is, the crystallite size La is calculated by substituting the Bragg angle and full width at half maximum of the diffraction peak f₁₀ into the following Scherrer equation: La=Kλ/(βcosΘ) . In the Scherrer equation, K represents a Scherrer constant (0.94), λ represents the wavelength of the CuKα ray (0.15418 nm), β represents the full width at half maximum (radian), and θ represents the Bragg angle (radian).

The crystallite size La of the catalyst of the present invention is not particularly limited as long as the effects of the present invention are obtained. The crystallite size La may be, for example, 10.00 nm or less, preferably 5.00 nm or less, more preferably 2.40 nm or less, still more preferably 2.30 nm or less, still more preferably 2.20 nm or less, still more preferably 2.10 nm or less, still more preferably 2.00 nm or less, still more preferably 1.90 nm or less, still more preferably 1.80 nm or less, still more preferably 1.70 nm or less, still more preferably 1.60 nm or less, and particularly preferably 1.50 nm or less.

The crystallite size La of the catalyst of the present invention may be, for example, 0.40 nm or more, 0.70 mm or more, 1.10 nm or more, 1.15 nm or more, 1.20 nm or more, 1.25 nm or more, 1.30 nm or more, 1.35 nm or more, or 1.40 nm or more. The crystallite size La of the catalyst of the present invention may be specified by arbitrarily combining any one of the above-mentioned lower limit values and any one of the above-mentioned upper limit values.

The crystallite size La falling within the above-mentioned ranges contributes to improvement in catalytic activity of the catalyst of the present invention. That is, when the crystallite size La is too large, the carbon structure extends excessively in the a-axis direction, and a problem may occur in that the active structure included in the carbon structure is excessively reduced. In contrast, when the crystallite size La is equal to or smaller than the above-mentioned upper limit value, the extension of the carbon structure in the a-axis direction is appropriately suppressed, and hence the active structure included in the carbon structure is effectively increased. As a result, the catalytic activity of the catalyst of the present invention is effectively improved. On the other hand, when the crystallite size La is too small, the crystallinity of the carbon structure in the a-axis direction is too low. Accordingly, the carbon structure has a disordered structure. As a result, a problem may occur in that the conductive path of electrons is hardly formed in the carbon structure. In contrast, when the crystallite size La is equal to or larger than the above-mentioned lower limit value, the conductive path of electrons is effectively formed in the carbon structure, and hence the catalytic activity of the catalyst of the present invention is more effectively improved.

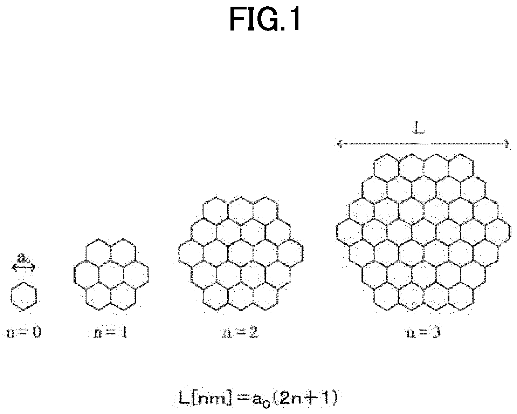

The average carbon network plane size L of the carbon catalyst is obtained by temperature programmed desorption (TPD) analysis capable of heating to 1,600°C of the carbon catalyst. That is, in the embodiment of the present invention, from the results of desorbed gas quantitative determination of high-temperature TPD of the carbon catalyst with a temperature programmed desorption analyzer (high-temperature TPD analyzer) capable of heating to 1,600°C, a total amount of carbon edge planes of the carbon catalyst is calculated, and the average carbon network plane size L obtained from the total amount is calculated with a coronene model illustrated in FIG. 1. In the equation shown in FIG. 1, a₀ represents a lattice constant of a graphite crystal in the a-axis direction, which is 0.2461 nm.

The average carbon network plane size L of the catalyst of the present invention is not particularly limited as long as the effects of the present invention are obtained. The average carbon network plane size L may be, for example, 5 nm or more, preferably 10 nm or more, more preferably 15 nm or more, still more preferably 19 nm or more, still more preferably 20 nm or more, still more preferably 21 nm or more, and particularly preferably 22 nm or more.

The average carbon network plane size L of the catalyst of the present invention may be, for example, 5,000 nm or less, 2,000 nm or less, 1,000 nm or less, 500 nm or less, 400 nm or less, 300 nm or less, 200 nm or less, 100 nm or less, 50 nm or less, 40 nm or less, 35 nm or less, 30 nm or less, 27 nm or less, 25 nm or less, or 24 nm or less. The average carbon network plane size L of the catalyst of the present invention may be specified by arbitrarily combining any one of the above-mentioned lower limit values and any one of the above-mentioned upper limit values.

The average carbon network plane size L falling within the above-mentioned ranges contributes to improvement in catalytic activity of the catalyst of the present invention. That is, when the average carbon network plane size L is too small, the continuity of the carbon structure is too low. Accordingly, a problem may occur in that the conductive path of electrons is hardly formed in the carbon structure. In contrast, when the average carbon network plane size L is equal to or larger than the above-mentioned lower limit value, the continuity of the carbon structure is improved, and hence the catalytic activity of the catalyst of the present invention is effectively improved. On the other hand, when the average carbon network plane size L is too large, the hexagonal network planes included in the carbon structure are likely to be stacked. Accordingly, the carbon structure has a structure with excessively large planarity. As a result, a problem may occur in that an inactive structure included in the carbon structure is excessively increased. In contrast, when the average carbon network plane size L is equal to or smaller than the above-mentioned upper limit value, the hexagonal network planes in the carbon structure are not excessively stacked, and the inactive structure included in the carbon structure is effectively reduced. Accordingly, the catalytic activity of the catalyst of the present invention is more effectively improved.

The BET specific surface area of the catalyst of the present invention is not particularly limited as long as the effects of the present invention are obtained. The BET specific surface area may be, for example, 100 m²/g or more, preferably 200 m²/g or more, more preferably 300 m²/g or more, still more preferably 400 m²/g or more, still more preferably 500 m²/g or more, and particularly preferably 600 m²/g or more.

The BET specific surface area of the catalyst of the present invention may be, for example, 4,000 m²/g or less, 3,500 m²/g or less, 3,000 m²/g or less, 2,500 m²/g or less, 2,000 m²/g or less, 1,500 m²/g or less, or 1,200 m²/g or less. The BET specific surface area of the catalyst of the present invention may be specified by arbitrarily combining any one of the above-mentioned lower limit values and any one of the above-mentioned upper limit values. The BET specific surface area is obtained by a nitrogen adsorption method.

The BET specific surface area falling within the above-mentioned ranges contributes to improvement in catalytic activity of the catalyst of the present invention. That is, when the BET specific surface area is too small, the carbon structure is densely stacked, and the amount of carbon atoms exposed is small. Accordingly, a problem may occur in that contact between the carbon structure and a reaction active material becomes difficult. In contrast, when the BET specific surface area is equal to or larger than the above-mentioned lower limit value, the carbon structure is effectively brought into contact with the reaction active material, and hence the catalytic activity of the catalyst of the present invention is effectively improved. On the other hand, when the BET specific surface area is too large, the carbon structure has a disordered structure. Accordingly, a problem may occur in that the conductive path of electrons is hardly formed in the carbon structure. In contrast, when the BET specific surface area is equal to or smaller than the above-mentioned upper limit value, the conductive path of electrons is effectively formed in the carbon structure. Accordingly, the catalytic activity of the catalyst of the present invention is more effectively improved.

The total pore volume of the catalyst of the present invention is not particularly limited as long as the effects of the present invention are obtained. The total pore volume may be, for example, 0.15 cm³/g or more, preferably 0.20 cm³/g or more, more preferably 0.30 cm³/g or more, still more preferably 0.40 cm³/g or more, still more preferably 0.50 cm³/g or more, still more preferably 0.60 cm³/g or more, still more preferably 0.70 cm³/g or more, still more preferably 0.80 cm³/g or more, still more preferably 0.90 cm³/g or more, still more preferably 1.00 cm³/g or more, and particularly preferably 1.10 cm³/g or more.

The total pore volume of the catalyst of the present invention may be, for example, 4.00 cm³/g or less, 3.50 cm³/g or less, 3.00 cm³/g or less, 2.80 cm³/g or less, or 2.60 cm³/g or less. The total pore volume of the catalyst of the present invention may be specified by arbitrarily combining any one of the above-mentioned lower limit values and any one of the above-mentioned upper limit values.

In the embodiment of the present invention, the total pore volume is the sum total of the volumes of all the pores. The total pore volume is obtained by a nitrogen adsorption method.

The total pore volume falling within the above-mentioned ranges contributes to improvement in catalytic activity of the catalyst of the present invention. That is, when the total pore volume is too small, the carbon structure is densely stacked, and the amount of carbon atoms exposed is small. Accordingly, a problem may occur in that contact between the carbon structure and a reaction active material is difficult. In contrast, when the total pore volume is equal to or larger than the above-mentioned lower limit value, the carbon structure is effectively brought into contact with the reaction active material, and hence the catalytic activity of the catalyst of the present invention is effectively improved. On the other hand, when the total pore volume is too large, the carbon structure has a disordered structure. Accordingly, a problem may occur in that the conductive path of electrons is hardly formed in the carbon structure. In contrast, when the total pore volume is equal to or smaller than the above-mentioned upper limit value, the conductive path of electrons is effectively formed in the carbon structure. Accordingly, the catalytic activity of the catalyst of the present invention is more effectively improved.

The micropore volume of the catalyst of the present invention is not particularly limited as long as the effects of the present invention are obtained. The micropore volume may be, for example, 1.60 cm³/g or less (0.00 cm³/g or more and 1.60 cm³/g or less), preferably 1.40 cm³/g or less, more preferably 1.20 cm³/g or less, still more preferably 1.00 cm³/g or less, still more preferably 0.90 cm³/g or less, still more preferably 0.80 cm³/g or less, still more preferably 0.70 cm³/g or less, still more preferably 0.60 cm³/g or less, and particularly preferably 0.55 cm³/g or less.

In the embodiment of the present invention, the micropores are pores each having a diameter of less than 2 nm, and the micropore volume is the volume of the micropores included in the catalyst of the present invention. The micropore volume is obtained by a nitrogen adsorption method.

The micropore volume falling within the above-mentioned ranges contributes to improvement in catalytic activity of the catalyst of the present invention. That is, when the micropore volume is too large, the carbon structure has a disordered structure. Accordingly, a problem may occur in that the conductive path of electrons is hardly formed in the carbon structure. In contrast, when the micropore volume is equal to or smaller than the above-mentioned upper limit value, the conductive path of electrons is effectively formed in the carbon structure, and a reaction active site is satisfactorily exposed. Accordingly, the catalytic activity of the catalyst of the present invention is more effectively improved.

The mesopore volume of the catalyst of the present invention is not particularly limited as long as the effects of the present invention are obtained. The mesopore volume may be, for example, 0.01 cm³/g or more, preferably 0.02 cm³/g or more, more preferably 0.04 cm³/g or more, still more preferably 0.05 cm³/g or more, still more preferably 0.10 cm³/g or more, still more preferably 0.20 cm³/g or more, still more preferably 0.30 cm³/g or more, still more preferably 0.40 cm³/g or more, still more preferably 0.50 cm³/g or more, still more preferably 0.60 cm³/g or more, still more preferably 0.70 cm³/g or more, still more preferably 0.80 cm³/g or more, still more preferably 0.90 cm³/g or more, and particularly preferably 1.0 cm³/g or more.

The mesopore volume of the catalyst of the present invention may be, for example, 5.00 cm³/g or less, 4.00 cm³/g or less, 3.00 cm³/g or less, 2.00 cm³/g or less, 1.90 cm³/g or less, 1.80 cm³/g or less, or 1.70 cm³/g or less. The mesopore volume of the catalyst may be specified by arbitrarily combining any one of the above-mentioned lower limit values and any one of the above-mentioned upper limit values.

In the embodiment of the present invention, the mesopores are pores each having a diameter of 2 nm or more and 50 nm or less, and the mesopore volume is the total volume of the mesopores included in the catalyst of the present invention. The mesopore volume is obtained by a nitrogen adsorption method.

The mesopore volume falling within the above-mentioned ranges contributes to improvement in catalytic activity of the catalyst of the present invention. That is, when the mesopore volume is too small, the transportation of a substance with a size of about several tens of nanometers that enters and exits the carbon structure (e.g., water and/or an ion-exchange substance) is prevented. Accordingly, a problem may occur in that a catalytic reaction is inhibited. In contrast, when the mesopore volume is equal to or larger than the above-mentioned lower limit value, the transportation of the substance to the carbon structure is smoothly performed, and hence the catalytic activity is effectively improved. On the other hand, when the mesopore volume is too large, the volume of the carbon structure becomes too large, and hence a problem may occur in that the catalytic activity with respect to a constant volume of the carbon catalyst is significantly reduced. In contrast, when the mesopore volume is equal to or smaller than the above-mentioned upper limit value, the catalytic activity with respect to the constant volume is effectively maintained. Accordingly, the catalytic activity of the catalyst of the present invention is more effectively improved.

The catalyst of the present invention preferably includes a nitrogen atom. That is, in this case, for example, the catalyst of the present invention includes a nitrogen atom doped into the carbon structure. Specifically, the ratio (hereinafter referred to as "N/C ratio") of the nitrogen atom concentration (at%) to the carbon atom concentration (at%) obtained by X-ray photoelectron spectroscopy (XPS) of the catalyst of the present invention may be, for example, 0.005 or more, preferably 0.015 or more, more preferably 0.020 or more, still more preferably 0.025 or more, still more preferably 0.030 or more, still more preferably 0.035 or more, still more preferably 0.040 or more, and particularly preferably 0.045 or more.

The N/C ratio of the catalyst of the present invention may be, for example, 0.300 or less, 0.200 or less, 0.150 or less, or 0.100 or less. The N/C ratio of the catalyst of the present invention may be specified by arbitrarily combining any one of the above-mentioned lower limit values and any one of the above-mentioned upper limit values.

The N/C ratio falling within the above-mentioned ranges contributes to improvement in catalytic activity of the catalyst of the present invention. That is, when the N/C ratio is too small, the amount of nitrogen included in the carbon structure is small, and hence the electron doping effect from nitrogen to carbon is small. As a result, a problem may occur in that the catalytic activity cannot be sufficiently improved. In contrast, when the N/C ratio is equal to or larger than the above-mentioned lower limit value, the electron doping effect from nitrogen to carbon is obtained, and hence the catalytic activity of the catalyst of the present invention is effectively improved. On the other hand, when the N/C ratio is too large, the carbon structure becomes disordered. Accordingly, a problem may occur in that the conductive path of electrons is hardly formed in the carbon structure. In contrast, when the N/C ratio is equal to or smaller than the above-mentioned upper limit value, the conductive path of electrons is effectively formed in the carbon structure. Accordingly, the catalytic activity of the catalyst of the present invention is more effectively improved.

The nitrogen atom concentration obtained by XPS of the catalyst of the present invention may be, for example, 0.3 (at%) or more, preferably 0.5 (at%) or more, more preferably 1.0 (at%) or more, still more preferably 1.5 (at%) or more, still more preferably 2.0 (at%) or more, still more preferably 2.5 (at%) or more, even still more preferably 3.0 (at%) or more, and particularly preferably 3.5 (at%) or more.

The nitrogen atom concentration obtained by XPS of the catalyst of the present invention may be, for example, 20.0 (at%) or less, 15.0 (at%) or less, 10.0 (at%) or less, or 9.0 (at%) or less. The nitrogen atom concentration obtained by XPS of the catalyst of the present invention may be specified by arbitrarily combining any one of the above-mentioned lower limit values and any one of the above-mentioned upper limit values.

The nitrogen atom concentration falling within the above-mentioned ranges contributes to improvement in catalytic activity of the catalyst of the present invention. That is, when the N/C ratio is too small, the amount of nitrogen included in the carbon structure is small, and hence the electron doping effect from nitrogen to carbon is small. As a result, a problem may occur in that the catalytic activity cannot be sufficiently improved. In contrast, when the N/C ratio is equal to or larger than the above-mentioned lower limit value, the electron doping effect from nitrogen to carbon is obtained, and hence the catalytic activity of the catalyst of the present invention is effectively improved. On the other hand, when the N/C ratio is too large, the carbon structure becomes disordered. Accordingly, a problem may occur in that the conductive path of electrons is hardly formed in the carbon structure. In contrast, when the N/C ratio is equal to or smaller than the above-mentioned upper limit value, the conductive path of electrons is effectively formed in the carbon structure. Accordingly, the catalytic activity of the catalyst of the present invention is more effectively improved.

The carbon atom concentration obtained by XPS of the catalyst of the present invention may be, for example, 50.0 (at%) or more, preferably 60.0 (at%) or more, more preferably 70.0 (at%) or more, still more preferably 75.0 (at%) or more, still more preferably 80.0 (at%) or more, and particularly preferably 85.0 (at%) or more.

The carbon atom concentration obtained by XPS of the catalyst of the present invention may be, for example, 99.0 (at%) or less, 95.0 (at%) or less, or 90.0 (at%) or less. The carbon atom concentration obtained by XPS of the catalyst of the present invention may be specified by arbitrarily combining any one of the above-mentioned lower limit values and any one of the above-mentioned upper limit values.

The carbon atom concentration falling within the above-mentioned ranges contributes to improvement in catalytic activity of the catalyst of the present invention. That is, when the carbon atom concentration is too low, hexagonal planes forming the carbon structure are insufficiently formed. Accordingly, a problem may occur in that the conductive path of electrons is unlikely to be formed. In contrast, when the carbon atom concentration is equal to or higher than the above-mentioned lower limit value, hexagonal planes forming the carbon structure are sufficiently formed, and hence the conductive path of electrons is effectively formed in the carbon structure. As a result, the catalytic activity of the catalyst of the present invention is effectively improved. On the other hand, when the carbon atom concentration is too high, the carbon structure has a structure with excessively large planarity. Accordingly a problem, may occur in that an inactive structure included in the carbon structure is excessively increased. In contrast, when the carbon atom concentration is equal to or lower than the above-mentioned upper limit value, the carbon structure has a structure having planarity that is not excessively high, and hence the inactive structure included in the carbon structure is effectively reduced. As a result, the catalytic activity of the catalyst of the present invention is effectively improved.

The catalyst of the present invention preferably includes an oxygen atom. That is, in this case, for example, the catalyst of the present invention includes an oxygen atom doped into the carbon structure. Specifically, the oxygen atom concentration obtained by XPS of the catalyst of the present invention may be, for example, 1.0 (at%) or more, preferably 2.5 (at%) or more, more preferably 5.0 (at%) or more, still more preferably 6.0 (at%) or more, still more preferably 7.0 (at%) or more, and particularly preferably 7.5 (at%) or more.

The oxygen atom concentration obtained by XPS of the catalyst of the present invention may be, for example, 30.0 (at%) or less, 20.0 (at%) or less, 17.0 (at%) or less, 16.0 (at%) or less, 15.0 (at%) or less, or 14.0 (at%) or less. The oxygen atom concentration obtained by XPS of the catalyst of the present invention may be specified by arbitrarily combining any one of the above-mentioned lower limit values and any one of the above-mentioned upper limit values.

The catalyst of the present invention may include a non-noble metal. Herein, the non-noble metal is a metal excluding noble metals. The noble metals are ruthenium (Ru), palladium (Pd), rhodium (Rh), silver (Ag), osmium (Os), iridium (Ir), platinum (Pt), and gold (Au).

The non-noble metal to be included in the catalyst of the present invention is not particularly limited as long as the effects of the present invention are obtained. The non-noble metal may be, for example, a non-noble metal belonging to Groups II to XIV in the periodic table of elements, preferably a non-noble metal belonging to the third to fifth periods of Groups II to XIV in the periodic table, and more preferably a non-noble metal belonging to the third and fourth periods of Groups II to XIV in the periodic table.

Specifically, the non-noble metal to be included in the catalyst of the present invention is, for example, more preferably one or more selected from the group consisting of: magnesium (Mg); aluminum (Al); calcium (Ca); titanium (Ti); manganese (Mn); iron (Fe); cobalt (Co); nickel (Ni); copper (Cu); zinc (Zn); yttrium (Y); zirconium (Zr); niobium (Nb); molybdenum (Mo); and tin (Sn), particularly preferably one or more selected from the group consisting of: Mg; Al; Ca; Fe; Cu; and Zn.

The content of the non-noble metal in the catalyst of the present invention (when the catalyst of the present invention includes a plurality of non-noble metals, the content is the total content of the plurality of non-noble metals) may be, for example, 50 ppm or more, 100 ppm or more, 1,000 ppm or more, 10,000 ppm or more, or 100,000 ppm or more. The content of the non-noble metal in the catalyst of the present invention may be, for example, 500,000 ppm or less, 400,000 ppm or less, 300,000 ppm or less, or 200,000 ppm or less. The content of the non-noble metal in the catalyst of the present invention may be specified by arbitrarily combining any one of the above-mentioned lower limit values and any one of the above-mentioned upper limit values. The content of the non-noble metal is obtained by inductively coupled plasma (ICP) atomic emission spectroscopy.

The non-noble metal to be included in the catalyst of the present invention contributes to improvement in catalytic activity of the catalyst of the present invention. That is, for example, when the catalyst of the present invention includes a non-noble metal derived from a raw material for carbonization described below, a specific carbon structure having a catalytic active site can be effectively formed by the carbonization in the presence of the non-noble metal. In addition, for example, when the catalyst of the present invention is obtained by impregnating a carbonized material obtained by carbonization with a non-noble metal (e.g., Fe) and then performing heat treatment, a specific carbon structure having a new catalytic active site can be effectively formed by performing the heat treatment in the presence of the non-noble metal.

When the catalyst of the present invention includes a non-noble metal, the non-noble metal atom concentration obtained by XPS of the catalyst of the present invention (when the catalyst of the present invention includes a plurality of non-noble metal atoms, the non-noble metal atom concentration is the total concentration of the plurality of non-noble metal atoms) may be, for example, 0.05 (at%) or more, preferably 0.15 (at%) or more, more preferably 0.3 (at%) or more, still more preferably 0.4 (at%) or more, and particularly preferably 0.5 (at%) or more. The non-noble metal atom concentration obtained by XPS of the catalyst of the present invention may be, for example, 10.0 (at%) or less, 7.5 (at%) or less, 5.0 (at%) or less, 4.0 (at%) or less, 3.0 (at%) or less, or 2.0 (at%) or less. The non-noble metal atom concentration obtained by XPS of the catalyst of the present invention may be specified by arbitrarily combining any one of the above-mentioned lower limit values and any one of the above-mentioned upper limit values.

The non-noble metal atom concentration falling within the above-mentioned ranges contributes to improvement in catalytic activity of the catalyst of the present invention. That is, when the non-noble metal atom concentration is too low, the number of active sites formed in the carbon structure is too small. Accordingly, a problem may occur in that sufficient catalytic activity is not obtained. In contrast, when the non-noble metal atom concentration is equal to or higher than the above-mentioned lower limit value, an active site is effectively formed in the carbon structure, and hence the catalytic activity of the catalyst of the present invention is effectively improved. On the other hand, when the non-noble metal atom concentration is too high, non-noble metal particles aggregate on the carbon structure. Accordingly, a problem may occur in that sufficient catalytic activity is not obtained. In contrast, when the non-noble metal atom concentration is equal to or lower than the above-mentioned upper limit value, non-noble metal particles are supported in a state of being dispersed on the carbon structure, and hence the catalytic activity of the catalyst of the present invention is more effectively improved.

When the catalyst of the present invention includes iron as the non-noble metal, the iron atom concentration obtained by XPS of the catalyst of the present invention may be, for example, 0.05 (at%) or more, or 0.1 (at%) or more, preferably 0.2 (at%) or more, more preferably 0.3 (at%) or more, still more preferably 0.4 (at%) or more, and particularly preferably 0.5 (at%) or more.

The iron atom concentration obtained by XPS of the catalyst of the present invention may be, for example, 10.0 (at%) or less, 7.5 (at%) or less, 5.0 (at%) or less, 3.5 (at%) or less, 2.0 (at%) or less, or 1.5 (at%) or less. The iron atom concentration obtained by XPS of the catalyst of the present invention may be specified by arbitrarily combining any one of the above-mentioned lower limit values and any one of the above-mentioned upper limit values.

The iron atom concentration falling within the above-mentioned ranges contributes to improvement in catalytic activity of the catalyst of the present invention. That is, when the iron atom concentration is too low, the number of active sites formed in the carbon structure is too small. Accordingly, a problem may occur in that sufficient catalytic activity is not obtained. In contrast, when the iron atom concentration is equal to or higher than the above-mentioned lower limit value, an active site is effectively formed in the carbon structure, and hence the catalytic activity of the catalyst of the present invention is effectively improved. On the other hand, when the iron atom concentration is too high, non-noble metal particles aggregate on the carbon structure. Accordingly a problem, may occur in that sufficient catalytic activity is not obtained. In contrast, when the iron atom concentration is equal to or lower than the above-mentioned upper limit value, iron particles are supported in a state of being dispersed on the carbon structure, and hence the catalytic activity of the catalyst of the present invention is more effectively improved.

When the catalyst of the present invention includes a non-noble metal derived from a raw material for carbonization described below, the catalyst of the present invention includes the non-noble metal due to the non-noble metal being included in the raw material for carbonization. In this case, the catalyst of the present invention includes the non-noble metal inside a skeleton forming a porous structure of the catalyst. Even when the catalyst of the present invention is a carbonized material produced through carbonization followed by metal removal treatment described below, the non-noble metal derived from the raw material for carbonization remains inside the skeleton of the catalyst of the present invention. The weight of the non-noble metal included inside the skeleton of the catalyst of the present invention out of the non-noble metals included in the catalyst of the present invention may be larger than the weight of the non-noble metal included in the surface of the skeleton of the catalyst of the present invention.

The non-noble metal inside the skeleton of the catalyst of the present invention may be detected by, for example, subjecting the skeleton to surface etching treatment and analyzing a cross-section exposed by the etching treatment. That is, in this case, when one particle of the catalyst of the present invention is subjected to etching treatment, the non-noble metal is detected in a cross-section of the particle exposed by the etching treatment. The non-noble metal included in the catalyst of the present invention may be detected by, for example, inductively coupled plasma (ICP) atomic emission spectroscopy of the catalyst of the present invention.

A carbon material forming the catalyst of the present invention is preferably a carbonized material obtained by carbonizing a raw material containing an organic substance as described below. In this regard, when the catalyst of the present invention is a carbon material obtained by further incorporating a non-noble metal **(e.g.,** Fe) to be supported on a carbonized material obtained by carbonizing a raw material containing an organic substance and a non-noble metal, the carbon structure of the catalyst of the present invention includes the non-noble metal, and it is conceivable that the catalytic activity of the catalyst of the present invention is based on an active site in which the non-noble metal derived from the raw material, the carbon structure, and the supported non-noble metal are complexed. This is supported by the fact that a carbon material obtained by only incorporating a non-noble metal to be supported on a carbon material having a carbon structure free of any non-noble metal does not have excellent catalytic activity, unlike the catalyst of the present invention.

The catalyst of the present invention may be free of any noble metal. That is, as described above, the catalyst of the present invention itself exhibits catalytic activity without including a noble metal supported thereon, and hence it is not necessary that the catalyst include a noble metal. However, the catalyst of the present invention may be used as a carbon carrier for supporting a metal catalyst such as a noble metal.

When the catalyst of the present invention includes the non-noble metal, the content of a metal other than Mg, Al, Ca, Ti, Mn, Fe, Co, Ni, Cu, Zn, Y, Zr, Nb, Mo, and Sn in the catalyst of the present invention or the content of a metal other than Mg, Al, Ca, Fe, Cu, and Zn therein may be, for example, 3,000 ppm or less, 2,000 ppm or less, 1,000 ppm or less, 500 ppm or less, 300 ppm or less, 200 ppm or less, 100 ppm or less, or 50 ppm or less.

A method of producing the catalyst of the present invention is not particularly limited as long as the method is capable of providing the catalyst of the present invention having the above-mentioned characteristics. The method is, for example, preferably a method including carbonizing a raw material containing an organic substance. The organic substance included in the raw material is not particularly limited as long as the organic substance can be carbonized. An organic compound included in the organic substance may be a polymer (e.g., a thermosetting resin and/or a thermoplastic resin), and/or may be an organic compound having a smaller molecular weight.

Specific examples of the organic substance may include one or more selected from the group consisting of: polyacrylonitrile; a polyacrylonitrile-polyacrylic acid copolymer; a polyacrylonitrile-polymethyl acrylate copolymer; a polyacrylonitrile-polymethacrylic acid copolymer; a polyacrylonitrile-polymethacrylic acid-polymethallyl sulfonic acid copolymer; a polyacrylonitrile-polymethyl methacrylate copolymer; a phenol resin; polyfurfuryl alcohol; furan; a furan resin; a phenol formaldehyde resin; melamine; a melamine resin; an epoxy resin; a nitrogen-containing chelate resin (e.g., one or more selected from the group consisting of: a polyamine-type resin; an iminodiacetic acid-type resin; an amino phosphoric acid-type resin; and an aminomethylphosphonic acid-type resin); a polyamide imide resin; pyrrole; polypyrrole; polyvinylpyrrole; 3-methylpolypyrrole; acrylonitrile; polyvinylidene chloride; thiophene; oxazole; thiazole; pyrazole; vinylpyridine; polyvinylpyridine; pyridazine; pyrimidine; piperazine; pyrane; morpholine; imidazole; 1-methylimidazole; 2-methylimidazole; quinoxaline; aniline; polyaniline; succinic acid dihydrazide; adipic acid dihydrazide; polysulfone; polyaminobismaleimide; polyimide; polyvinyl alcohol; polyvinyl butyral; benzimidazole; polybenzimidazole; polyamide; polyester; polylactic acid; polyether; polyether ether ketone; cellulose; carboxymethyl cellulose; lignin; chitin; chitosan; pitch; silk; wool; polyamino acid; a nucleic acid; DNA; RNA; hydrazine; hydrazide; urea; salen; polycarbazole; polybismaleimide; triazine; polyacrylic acid; a polyacrylic acid ester; a polymethacrylic acid ester; polymethacrylic acid; polyurethane; polyamidoamine; polycarbodiimide; naphthalene; a naphthalene analog; anthracene; an anthracene analog; hydroxybenzene; a hydroxybenzene analog; carbazole; quinoline; cyanuric acid; naphthoic acid; methylene blue; and phthalocyanine.

The organic substance is preferably a nitrogen-containing organic substance. For example, the nitrogen-containing organic substance contains a nitrogen-containing organic compound. The nitrogen-containing organic compound is not particularly limited as long as the organic compound contains a nitrogen atom in its molecule.

The catalyst of the present invention is preferably a carbonized material obtained by carbonizing a raw material containing an organic substance and a non-noble metal. In this case, the catalyst of the present invention may be a carbonized material subjected to metal removal treatment after the carbonization. The metal removal treatment is treatment for reducing the amount of a raw material-derived non-noble metal included in the carbonized material. Specifically, for example, the metal removal treatment preferably involves washing treatment with an acid and/or electrolytic treatment.

The carbonization is performed by heating the raw material at a temperature at which the organic substance included in the raw material is carbonized. The carbonizing temperature is not particularly limited as long as the raw material is carbonized at the temperature. The carbonizing temperature is, for example, preferably 900°C or more, more preferably 1,000°C or more, still more preferably 1,100°C or more, particularly preferably 1,200°C or more.

The carbonizing temperature may be, for example, 3,000°C or less, preferably 2,500°C or less, more preferably 2,000°C or less, and particularly preferably 1,900°C or less. The carbonizing temperature may be specified by arbitrarily combining any one of the above-mentioned lower limit values and any one of the above-mentioned upper limit values. A temperature increase rate up to the carbonizing temperature is not particularly limited, and may be, for example, 0.5°C/min or more and 300°C/min or less. The carbonization is preferably performed in an inert atmosphere such as a nitrogen atmosphere.

The catalyst of the present invention may be a carbon material obtained by further incorporating a non-noble metal to be supported on a carbonized material obtained by carbonizing the raw material containing the organic substance and a non-noble metal. In this case, the catalyst of the present invention includes a first non-noble metal derived from the raw material for carbonization and a second non-noble metal supported on the catalyst after the carbonization. The first non-noble metal and the second non-noble metal may be the same non-noble metal or different non-noble metals.

The first non-noble metal and the second non-noble metal are not particularly limited as long as the effects of the present invention are obtained. For example, the first non-noble metal and the second non-noble metal may each independently be non-noble metals belonging to Groups II to XIV in the periodic table, and preferably non-noble metals belonging to the third to fifth periods of Groups II to XIV in the periodic table.

Specifically, for example, the first non-noble metal and the second non-noble metal are each preferably one or more selected from the group consisting of: Mg; Al; Ca; Ti; Mn; Fe; Co; Ni; Cu; Zn; Y; Zr; Nb; Mo; and Sn, and are each particularly preferably one or more selected from the group consisting of: Mg; Al; Ca; Fe; Cu; and Zn.

For example, it is preferred that the first non-noble metal be one or more selected from the group consisting of: Mg; Al; Ca; Ti; Mn; Fe; Co; Ni; Cu; Zn; and Sn, and the second non-noble metal be one or more selected from the group consisting of: Fe; Y; Zr; Nb; and Mo, and it is particularly preferred that the first non-noble metal be one or more selected from the group consisting of: Mg; Al; Ca; Cu; and Zn, and the second non-noble metal be Fe.

When the catalyst of the present invention includes a specific kind of first non-noble metal (e.g., one selected from the above-mentioned group) and a specific kind of second non-noble metal (e.g., one that is selected from the above-mentioned group and is different from the first non-noble metal) that is different from the first non-noble metal, the weight of the first non-noble metal included inside the skeleton of the catalyst of the present invention may be larger than the weight of the first non-noble metal included in the surface of the skeleton of the catalyst of the present invention, and the weight of the second non-noble metal included in the surface of the skeleton of the catalyst of the present invention may be larger than the weight of the second non-noble metal included inside the skeleton of the catalyst of the present invention.

An electrode according to an embodiment of the present invention (hereinafter referred to as "electrode of the present invention") includes the catalyst of the present invention. That is, the electrode of the present invention may include an electrode base material and the catalyst of the present invention supported on the electrode base material. The electrode of the present invention is preferably a battery electrode. Specifically, the electrode of the present invention is preferably, for example, an electrode for a fuel cell (e.g., a polymer electrolyte fuel cell or a microbial fuel cell), an air cell, a water electrolyzer (e.g., a polymer electrolyte water electrolyzer), a redox flow battery, or a halogen battery.

The electrode of the present invention may be a cathode or an anode, but is preferably a cathode. That is, the electrode of the present invention is a cathode or an anode of a fuel cell, an air cell, a water electrolyzer, a redox flow battery, or a halogen battery, preferably a cathode thereof.

A battery according to an embodiment of the present invention (hereinafter referred to as "battery of the present invention") includes the electrode of the present invention. Specifically, the battery of the present invention is preferably a fuel cell (e.g., a polymer electrolyte fuel cell or a microbial fuel cell), an air cell, a redox flow battery, or a halogen battery including the electrode of the present invention. The battery of the present invention is preferably a membrane electrode assembly (MEA) including the electrode of the present invention.

The battery of the present invention is a battery including the electrode of the present invention as a cathode or an anode, preferably a battery including the electrode of the present invention as a cathode. That is, the battery of the present invention is a fuel cell, an air cell, a redox flow battery, or a halogen battery including the electrode of the present invention as a cathode or an anode, preferably a fuel cell, an air cell, a redox flow battery, or a halogen battery including the electrode of the present invention as a cathode.

Next, specific Examples according to the embodiments of the present invention will be described.

### Examples

### [Example 1]

0.5 g of a novolac-type phenol resin was dissolved in 80 g of acetone, and 11.20 g of copper(II) chloride (CuCl₂) was further added thereto to prepare a homogeneous solution. The solution was dried under a vacuum at 80°C for 1 day to provide a raw material for carbonization.

The resultant raw material was loaded into a quartz tube. The raw material was heated to 1,200°C at a rate of 50°C/min in a nitrogen atmosphere in an image furnace and held at 1,200°C for 1 hour to perform carbonization.

Subsequently, silicon nitride balls each having a diameter of 10 mm were set in a planetary ball mill (P-7, manufactured by Fritsch Japan Co., Ltd.), and the carbonized material obtained by the carbonization was pulverized with the planetary ball mill.

20 mL of concentrated nitric acid was added to the pulverized carbonized material, and the mixture was stirred for 30 minutes. After that, the carbonized material was precipitated, and the solution was removed. This treatment was repeated several times, distilled water was then added to the precipitate, and the mixture was stirred. The solution containing the carbonized material was filtered with a filtration membrane, and the carbonized material was washed with distilled water until the filtrate became neutral. The collected carbonized material was dried under a vacuum.

The carbonized material subjected to metal removal treatment as described above was loaded into a quartz tube, and was heated in a nitrogen atmosphere in an image furnace and held at 1,200°C for 30 minutes to perform heat treatment. Thus, a carbon carrier of Example 1 was obtained.

4 mL of a solution prepared by dissolving 10 mg of iron phthalocyanine in dimethyl sulfoxide was added to 20 mg of the thus obtained carbon carrier to provide a slurry. The slurry was treated with an ultrasonic wave (55 W, 38 kHz) for 20 minutes and further filtered with suction to provide a powder. The powder was dried under a vacuum at 80°C for 2 hours.

The dried powder was loaded into a quartz tube, and was heated in a nitrogen atmosphere in an image furnace and held at 500°C for 30 minutes to perform heat treatment. To the powder after the heat treatment, 20 mL of concentrated hydrochloric acid was added, and the mixture was stirred for 2 hours. After that, the mixture was filtered with suction, and the residue was washed with distilled water until the filtrate became neutral. The collected powder was dried under a vacuum.

The dried powder was loaded into a quartz tube, and was heated in a nitrogen atmosphere in an image furnace and held at 500°C for 30 minutes to perform heat treatment after metal removal treatment. Thus, a carbon catalyst of Example 1 was obtained.

### [Example 2]

1.5 g of naphthoic acid was dissolved in 80 g of acetone, and 23.23 g of aluminum(III) chloride (AlCl₃) and 23.75 g of zinc(II) chloride (ZnCl₂) were further added thereto to prepare a homogeneous solution. The solution was dried under a vacuum at 80°C for 1 day to provide a raw material for carbonization. After that, a carbon carrier of Example 2 was obtained in the same manner as in Example 1 described above except that 20 mL of nitric acid-hydrofluoric acid (HNO₃:HF=1 mol:1 mol) was used instead of concentrated nitric acid. Further, the thus obtained carbon carrier was subjected to the same treatment as in Example 1 described above to provide a carbon catalyst of Example 2. [Example 3]

0.5 g of a novolac-type phenol resin was dissolved in 80 g of acetone, and 17.86 g of magnesium acetate tetrahydrate ((CH₃COO)₂Mg·4H₂O) was further added thereto to prepare a homogeneous solution. The solution was dried under a vacuum at 80°C for 1 day to provide a raw material for carbonization. After that, a carbon carrier of Example 3 was obtained in the same manner as in Example 1 described above except that 20 mL of concentrated hydrochloric acid was used instead of concentrated nitric acid. Further, the thus obtained carbon carrier was subjected to the same treatment as in Example 1 described above to provide a carbon catalyst of Example 3.

### [Example C1]

A commercially available carbon material (CNovel MH-00, manufactured by Toyo Tanso Co., Ltd.) was used as a carbon carrier. 4 mL of a solution prepared by dissolving 10 mg of iron phthalocyanine in dimethyl sulfoxide was added to 20 mg of the carbon carrier to provide a slurry. The slurry was treated with an ultrasonic wave (55 W, 38 kHz) for 20 minutes and further filtered with suction to provide a powder. The powder was dried under a vacuum at 80°C for 2 hours.

The dried powder was loaded into a quartz tube, and was heated in a nitrogen atmosphere in an image furnace and held at 500°C for 30 minutes to perform heat treatment. To the powder after the heat treatment, 20 mL of concentrated hydrochloric acid was added, and the mixture was stirred for 2 hours. After that, the mixture was filtered with suction, and the residue was washed with distilled water until the filtrate became neutral. The collected powder was dried under a vacuum. The dried powder was loaded into a quartz tube, and was heated in a nitrogen atmosphere in an image furnace and held at 500°C for 30 minutes to perform heat treatment after metal removal treatment. Thus, a carbon catalyst of Example C1 was obtained.

### [Example C2]

A commercially available carbon material (MSC30, manufactured by Kansai Coke and Chemicals Company, Limited) was used as a carbon carrier. The carbon carrier was subjected to the same treatment as in Example C1 described above to provide a carbon catalyst of Example C2.

### [Example C3]

0.5 g of polyacrylonitrile (PAN) was dissolved in 80 g of N,N-dimethylformamide, and 25.69 g of zinc(II) chloride (ZnCl₂) was further added thereto to prepare a homogeneous solution. The solution was dried under a vacuum at 80°C for 1 day to provide a raw material for carbonization. After that, a carbon carrier of Example C3 was obtained in the same manner as in Example 3 described above. Further, the thus obtained carbon carrier was subjected to the same treatment as in Example 1 described above to provide a carbon catalyst of Example C3.

### [Example C4]

A carbon carrier of Example C4 was obtained in the same manner as in Example 3 described above except that 11.35 g of zinc(II) chloride (ZnCl₂) was used instead of copper chloride. Further, the thus obtained carbon carrier was subjected to the same treatment as in Example 1 described above to provide a carbon catalyst of Example C4.

### [Example C5]

1.0 g of a polyacrylonitrile-polymethacrylic acid copolymer (PAN/PMA) was dissolved in 15 g of dimethylformamide to prepare a solution (a). In addition, 1.0 g of 2-methylimidazole and 5.78 g of zinc chloride (ZnCl₂) were added to 15 g of dimethylformamide and dissolved therein to prepare a solution (b). Next, the solution (a) and the solution (b) were mixed, 0.187 g of iron powder was further added thereto, and the contents were mixed. After that, the resultant mixture was dried under a vacuum at 60°C for 1 day.

The mixture was heated in air so that its temperature was increased from room temperature to 150°C in 30 minutes, and subsequently increased from 150°C to 220°C over 2 hours. After that, the mixture was held at 220°C for 3 hours so that the mixture was infusibilized. Further, silicon nitride balls each having a diameter of 10 mm were set in a planetary ball mill (P-7, manufactured by Fritsch Japan Co., Ltd.), and the mixture was pulverized with the planetary ball mill. Thus, a raw material for carbonization was prepared.

Next, the raw material obtained as described above was loaded into a quartz tube, and the raw material was heated in a nitrogen atmosphere in an image furnace and held at 1,100°C for 1 hour to perform carbonization. Subsequently, silicon nitride balls each having a diameter of 10 mm were set in a planetary ball mill (P-7, manufactured by Fritsch Japan Co., Ltd.), and the carbonized material obtained by the carbonization was pulverized with the planetary ball mill. Further, zirconia beads, each having a diameter of 0.3 mm, and methanol were loaded into a bead mill (manufactured by AIMEX Co., Ltd.), and the carbonized material was pulverized with the bead mill.

20 mL of concentrated hydrochloric acid was added to 1.0 g of the carbonized material obtained by the pulverization described above, and the mixture was stirred for 30 minutes. After that, the carbonized material was precipitated, and the solution was removed. This treatment was repeated several times, distilled water was then added to the precipitate, and the mixture was stirred. The solution containing the carbonized material was filtered with a filtration membrane, and the carbonized material was washed with distilled water until the filtrate became neutral. The collected carbonized material was dried under a vacuum, and the dried carbonized material was further pulverized in a mortar.

The carbonized material subjected to metal removal treatment as described above was loaded into a quartz tube, and was heated in a nitrogen atmosphere in an image furnace and held at 700°C for 1 hour to perform heat treatment after the metal removal treatment. Next, the carbonized material after the heat treatment described above was pulverized with a ball mill. Thus, a carbon catalyst of Example C5 was obtained.

### [Powder X-ray Diffraction]

The carbon catalyst of each of Examples was subjected to powder X-ray diffraction (XRD) measurement with an X-ray diffractometer (XRD-6100, manufactured by Rigaku Corporation). A Cukα ray was used as an incident X-ray, a voltage and current applied to an X-ray tube were set to 40 kV and 15 mA, respectively, and a measurement angle range (2θ) was set within the range of from 5° to 90°.

As described above, when the carbon catalyst has a structure in which carbon hexagonal network planes are connected to extend in an a-axis direction, among crystallites forming curved carbon network planes that contribute to its catalytic activity, a diffraction peak f₁₀ that is a (10) diffraction line of carbon having a peak top in the vicinity of a diffraction angle (2θ) of 43° (e.g., within the range of from 35° to 60°) appears in the X-ray diffraction pattern using a CuKα ray.

When the carbon catalyst includes iron as the non-noble metal, a diffraction peak derived from iron may appear in the vicinity of a diffraction angle (2θ) of 43°. That is, in this case, the (10) diffraction line of carbon is mixed with a diffraction peak f_{Fe} that is a diffraction line derived from iron in a diffraction line derived from the carbon structure.

Accordingly, with respect to the carbon catalyst including iron, the diffraction peak in the vicinity of a diffraction angle (2θ) of 43° was separated into two diffraction peaks, that is, f₁₀ and f_{Fe}, by peak separation of X-ray diffraction data.

The peak separation was performed by approximating overlapping diffraction peaks through superimposition onto Voigt basic waveforms. The diffraction pattern having been subjected to background correction was subjected to fitting by being optimized through use of the peak intensities, peak full widths at half maximum, and peak positions of Voigt functions serving as the respective components as parameters. A method for the background correction is not particularly limited as long as the baseline can be adjusted. In Examples, the background correction was performed by determining an approximate straight line (linear function) from interval data between peak initiation and peak termination and subtracting a value of the approximate straight line of the measurement data from each diffraction intensity.

More specifically, the peak separation was performed by the following procedure. In the X-ray diffraction pattern obtained by using a CuKα ray having been subjected to the background correction, a diffraction peak having a peak top in the vicinity of a diffraction angle 2θ of 43° was approximated through superimposition onto a Voigt basic waveform, the peak intensity, peak full width at half maximum, and peak position thereof were optimized, and each of two overlapping diffraction peaks included in the diffraction peaks was subjected to curve fitting, resulting in peak separation.

The curve fitting was performed so that a residual sum of squares became smallest. Herein, the term "residual square" refers to the square of a residual at each diffraction angle measured, and the term "residual sum of squares" refers to the sum of these residual squares. In addition, the term "residual" refers to a difference between the intensity of the diffraction peak having a peak top in the vicinity of a diffraction angle 2θ of 43° in the X-ray diffraction pattern obtained by using a CuKα ray, and the sum of the intensities of the two diffraction peaks f₁₀ and f_{Fe} obtained by separation.

The two diffraction peaks were obtained by such peak separation. The diffraction peak f₁₀ was defined as a diffraction peak having a diffraction angle (2θ) of 34.5°±1.0° and a full width at half maximum of 7.5°±6.5°. The diffraction peak f_{Fe} was defined as a diffraction peak having a diffraction angle (2θ) of 44.0°±1.0° and a full width at half maximum of 0.5°±0.3°.

Then, the crystallite size La was calculated by analyzing the diffraction peak f₁₀ obtained by the peak separation described above. That is, the crystallite size La was calculated by substituting the Bragg angle and full width at half maximum of the diffraction peak f₁₀ into the following Scherrer equation: La=Kλ/(βcosΘ) . In the Scherrer equation, K represents a Scherrer constant (0.94), λ represents the wavelength of the CuKα ray (0.15418 nm), β represents the full width at half maximum (radian), and θ represents the Bragg angle (radian).

### [Temperature Programmed Desorption Analysis]

The carbon catalyst of each of Examples was subjected to temperature programmed desorption analysis with a temperature programmed desorption analyzer (high-temperature TPD analyzer) capable of heating to 1,600°C. The high-temperature TPD analyzer is an apparatus capable of heating a graphite crucible serving as a body to be heated to a high temperature of 1,600°C or more through high-frequency electromagnetic induction heating. The details of the high-temperature TPD analyzer are described in the journal Carbon (Takafumi Ishi, Susumu Kashihara, Yasuto Hoshikawa, Jun-ichi Ozaki, Naokatsu Kannari, Kazuyuki Takai, Toshiaki Enoki, Takashi Kyotani, Carbon, Volume 80, December 2014, pages 135-145).

The carbon catalyst was placed in the high-temperature TPD analyzer and heated under a high vacuum of 5×10⁻⁵ Pa or less, and a desorbed gas was measured with a quadrupole mass spectrometer (QMS).

Specifically, first, a graphite crucible was filled with 1 mg of the carbon catalyst and set in a quartz reaction tube attached to the high-temperature TPD analyzer. Subsequently, the inside of the analyzer was evacuated with a turbo-molecular pump to a pressure of 5×10⁻⁵ Pa, and then heated from room temperature to 1,600°C at a temperature increase rate of 10°C/min. During the heating, a desorbed gas was detected, and a correlation between a temperature (horizontal axis) and a detection intensity (vertical axis) was recorded. Then, the amount of the desorbed gas was determined. That is, the integrated value of the detection intensities (detection intensity area) of the desorbed gas from room temperature at which heat treatment was started to the temperature to be determined (1,600°C) was calculated.

Meanwhile, a calibration curve showing a correlation between the desorption amount of the gas and the detection intensity area was formed by using predetermined amounts of a standard gas. In analysis of the desorbed gas from the sample with the QMS, fragment intensity ratios of various gaseous species (H₂, H₂O, CO, CO₂, N₂, HCN, O₂, CH₄, C₂H₆, C₃H₆, and C₃H₈) were investigated and used for qualitative analysis of the desorbed gas, to clearly distinguish the gaseous species with the same mass (species with a mass number of 28 may be CO, N₂, C₂H₄, and the like) included in the desorbed gas from each other. Then, the desorption amount (release amount) of the gas from the carbon catalyst was determined from the detection intensity area obtained by the measurement, and the calibration curve and the fragment intensity ratios. In addition, in order to validate the adequacy of the formed calibration curve, Ketjen black EC600JD (Lion Specialty Chemicals Co., Ltd.) was used for measurement, and it was recognized that the amount of edge hydrogen fell within the range of from 1,000 [µmol/g] to 1,500 [µmol/g].

Herein, the actual size of a carbon network plane forming carbon can be evaluated from the average carbon network plane size L determined from the amount of the edge planes of carbon. In the embodiment of the present invention, from the results of desorbed gas quantitative determination of high-temperature TPD of the carbon catalyst, the total amount of carbon edge planes of the carbon catalyst was calculated, and the average carbon network plane size L determined from the total amount was calculated with a coronene model illustrated in FIG. 1. In the equation shown in FIG. 1, a₀ represents the lattice constant of a graphite crystal in the a-axis direction, which is 0.2461 nm.

In addition, it is known that a phenolic hydroxy group of an oxygen-containing compound is decomposed in the form of carbon monoxide by heating, and a hydrogen atom derived from the hydroxy group remains at a carbon edge. Accordingly, the hydrogen amount determined by high-temperature TPD may include a contribution of hydrogen derived from the phenolic hydroxy group. Consequently, the phenolic hydroxy group needs to be considered for rigorous calculation of the total amount of the edge planes. For example, both of an ether (-O) and a phenolic hydroxy group (-OH) are functional groups to be desorbed in the form of CO in the vicinity of 700°C. After a phenolic hydroxy group is desorbed in the form of CO, H remains at an edge site. Accordingly, the phenolic hydroxy group is desorbed in the form of CO and then desorbed in the form of H₂ at a temperature of 1,000°C or more. In addition, the phenolic hydroxy group differs from the ether in that two gaseous species (CO and H₂) are desorbed from one functional group. From the desorption of CO observed by TPD analysis, the ether and the phenolic hydroxy group cannot be distinguished from each other. Accordingly, the desorption of CO was classified into two cases: the case in which CO was derived from the ether alone; and the case in which CO was derived from the phenolic hydroxy group alone. In each case, the amount of carbon edge sites, and L were calculated.

In high-temperature TPD, it was assumed that CO was desorbed from a phenolic hydroxy group or an ether. Possible values of the total amount (N_{edge}) of the edge planes of the carbon catalyst were calculated by two equations described below. When the desorbed CO is all derived from the ether, the N_{edge} amount always has the maximum value. Accordingly, N_{edge}(Max) was calculated by the following equation: N_{edge}(Max) [mol/g]=CO [mol/g]+CO₂ [mol/g]+H₂ [mol/g]×2. When desorbed CO is all derived from the phenolic hydroxy group, the N_{edge} amount has the minimum value. Accordingly, N_{edge} (Min) was calculated by the following equation: N_{edge} (Min) [mol/g]=CO₂ [mol/g]+H₂ [mol/g]×2. In the equations, CO [mol/g], CO₂ [mol/g], and H₂ [mol/g] are the desorbed gas amounts of carbon monoxide, carbon dioxide, and hydrogen, respectively, determined by high-temperature TPD.

Meanwhile, the average carbon network plane size L is determined by the following equation through use of an atomic weight of a carbon atom of 12 g/mol and a lattice constant of a graphite crystal in the a-axis direction of 0.2461 nm: L [nm]=2×1/12×0.2461/N_{edge} [mol/g]. Herein, the maximum value "L(Max)" and minimum value "L(Min)" of L are calculated by two equations described below, respectively: "L(Max) " [nm]=2×1/12×0.2461/N_{edge}(Min) [mol/g] ; and "L (Min)" [nm]=2×1/12×0.2461/N_{edge}(Max) [mol/g].

As described above, since CO derived from the ether and CO derived from the phenolic hydroxy group cannot be distinguished from each other, two values, that are the maximum value and the minimum value, are calculated for the average carbon network plane size L. "L(Max)" corresponds to the case in which the phenolic hydroxy group alone is present, and "L(Min) " corresponds to the case in which the ether alone is present. However, it is difficult to consider that an actual material has only one of the phenolic hydroxy group or the ether. Accordingly, the average carbon network plane size L of the carbon catalyst is defined as a median "L(av.)" of "L(Max) " and "L(Min) ". "L(av.)" is obtained by dividing the sum of "L(Min)", which is obtained as the minimum value of possible values of the average carbon network plane size L, and "L(max)", which is obtained as the maximum value of the possible values, by 2. The "L(av.)" was obtained as the average carbon network plane size L of the carbon catalyst.

### [X-ray Photoelectron Spectroscopy (XPS)]

A photoelectron spectrum from inner shell levels of a carbon atom, a nitrogen atom, an oxygen atom, and an iron atom on the surface of the carbon catalyst of each of Examples was measured with an X-ray photoelectron spectroscopy apparatus (AXIS Nova, manufactured by Kratos Analytical Ltd.). An AlKα ray (10 mA, 15 kV, Pass energy: 40 eV) was used for an X-ray source. In the resultant photoelectron spectrum, the binding energy was corrected so that the peak top of a C1s peak derived from the 1s orbital of the carbon atom was positioned at 284.5 eV.

Using XPS wide scan analysis, the atom concentrations (at%) of the carbon atom, the nitrogen atom, the oxygen atom, and the iron atom in the surface of the carbon catalyst were determined from the peak area and the detection sensitivity coefficient in the photoelectron spectrum. In addition, the N/C ratio was calculated by dividing the nitrogen atom concentration (at%) by the carbon atom concentration (at%). In the calculation of the atom concentrations (at%), the carbon catalyst was assumed to include a carbon atom, a nitrogen atom, an oxygen atom, a sulfur atom, a boron atom, a chlorine atom, and a metal atom included in the raw material for carbonization.

### [Specific Surface Area and Pore Volume]

The specific surface area and pore volume of the carbon catalyst of each of Examples were measured by a nitrogen adsorption method with a specific surface area-pore distribution measurement apparatus (BELSORP MAX, manufactured by MicrotracBEL Corp.).

That is, first, 0.1 g of the carbon catalyst was held at 100°C and 6.7×10⁻² Pa for 3 hours so that water adsorbed on the carbon catalyst was removed. Next, a nitrogen adsorption isotherm at 77 K was obtained by a BET method. The nitrogen adsorption isotherm at 77 K was obtained by measuring a change in amount of nitrogen adsorbed on the carbon catalyst associated with a change in pressure of a nitrogen gas at a temperature of 77 K. Moreover, the BET specific surface area (m²/g) of the carbon catalyst by a nitrogen adsorption method was obtained from the nitrogen adsorption isotherm at a temperature of 77 K. In addition, from the nitrogen adsorption isotherm at a temperature of 77 K, the total pore volume (cm³/g) was obtained by the BET method, the micropore volume (cm³/g) was obtained by an MP method, and the mesopore volume (cm³/g) was obtained by a DH method.

### [Evaluation of Catalytic Activity]

The catalytic activity of each of the carbon catalysts was evaluated with a rotating ring-disk electrode apparatus (RRDE-3A Rotating Ring-disk Electrode Apparatus ver. 1.2, manufactured by BAS Inc.) and a dual electrochemical analyzer (CHI700C, manufactured by ALS Co., Ltd.).

That is, a rotating ring-disk electrode apparatus of a three-electrode system including a working electrode including each of the carbon catalysts was first produced. Specifically, 5 mg of the carbon catalyst, 50 µL of 5% NAFION (trademark) (manufactured by Sigma-Aldrich, NAFION perfluorinated ion-exchange resin, 5% solution (product number: 510211)), 400 µL of water, and 100 µL of isopropyl alcohol were mixed to prepare a slurry. Next, the slurry was subjected to ultrasonic treatment for 10 minutes, and then subjected to homogenizer treatment for 2 minutes. Then, the resultant slurry was applied to a working electrode (ring-disk electrode for RRDE-3A, platinum ring-gold disk electrode, disk diameter: 4 mm, manufactured by BAS Inc.) so that the content of the carbon catalyst per unit area of the electrode became 0.1 mg/cm², and dried to produce a working electrode carrying the carbon catalyst.

A platinum electrode (Pt counter electrode of 23 cm, manufactured by BAS Inc.) was used as a counter electrode, and a reversible hydrogen electrode (RHE) (storage type reversible hydrogen electrode, manufactured by EC Frontier Co., Ltd.) was used as a reference electrode. Thus, a rotating ring-disk electrode apparatus including the working electrode including the carbon catalyst, the platinum electrode serving as the counter electrode, and the reversible hydrogen electrode (RHE) serving as the reference electrode, was obtained. In addition, a 0.1 M aqueous solution of perchloric acid was used as an electrolytic solution.

Moreover, the catalytic activity of each of the carbon catalysts was measured with the rotating ring-disk electrode apparatus. That is, linear sweep voltammetry (N₂-LSV) under a nitrogen atmosphere and linear sweep voltammetry (O₂-LSV) under an oxygen atmosphere were performed with the rotating ring-disk electrode apparatus of a three-electrode system including the working electrode including each of the carbon catalysts.

In N₂-LSV, nitrogen bubbling was first performed for 10 minutes to remove oxygen in the electrolytic solution. After that, the electrode was rotated at a rotation speed of 1,600 rpm, and the current density at the time of potential sweep at a sweep rate of 20 mV/sec was recorded as a function of potential (N₂-LSV).

After that, in O₂-LSV, oxygen bubbling was performed for 10 minutes, and the electrolytic solution was filled with saturated oxygen. After that, the electrode was rotated at a rotation speed of 1,600 rpm, and the current density at the time of potential sweep at a sweep rate of 20 mV/sec was recorded as a function of potential (O₂-LSV).

Then, an oxygen reduction voltammogram was obtained by subtracting N₂-LSV from O₂-LSV. In the obtained oxygen reduction voltammogram, positive and negative signs were placed before numerical values so that a reduction current had a negative value and an oxidation current had a positive value.

From the thus obtained oxygen reduction voltammogram, the current density i_{0.6} (mA/cm²) under application of a voltage of 0.6 V (vs. NHE) was recorded as an indicator of the catalytic activity of the carbon catalyst itself.

### [Results]

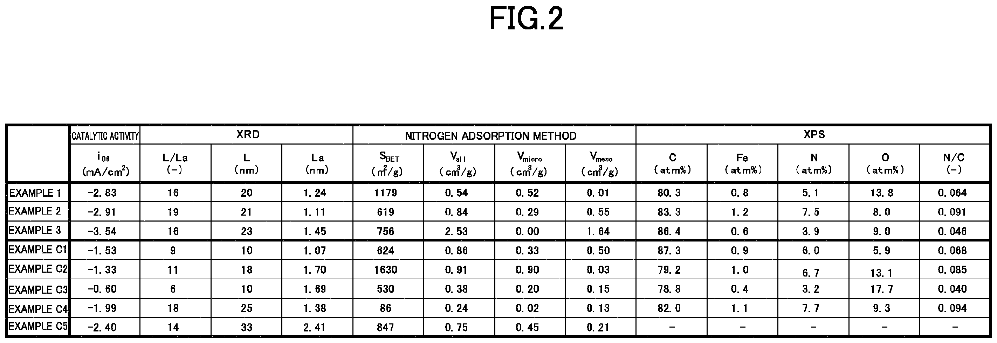

FIG. 2 shows evaluation results of characteristics of the carbon catalysts of Examples. As shown in FIG. 2, the absolute values of the current densities i_{0.6} (mA/cm²) of the carbon catalysts of Examples 1 to 3 were larger than those of the carbon catalysts of Examples C1 to C5. That is, the carbon catalysts of Examples 1 to 3 each exhibited catalytic activity higher than those of the carbon catalysts of Examples C1 to C5.

The absolute values of current densities i_{0.6} (mA/cm²) of the carbon catalysts of Examples 2 and 3 out of the above-mentioned carbon catalysts were larger than that of the carbon catalyst of Example 1, and in particular, the absolute value of the current density i_{0.6} (mA/cm²) of the carbon catalyst of Example 3 was larger than those of the carbon catalysts of Examples 1 and 2. That is, the carbon catalysts of Examples 2 and 3 each exhibited catalytic activity higher than that of the carbon catalyst of Example 1, and the carbon catalyst of Example 3 exhibited catalytic activity higher than those of the carbon catalysts of Examples 1 and 2.

The ratios L/La (the ratio of the average carbon network plane size L to the crystallite size La) of the carbon catalysts of Examples 1 to 3 were larger than those of the carbon catalysts of Examples C1 to C3 and C5. In addition, the average carbon network plane sizes L of the carbon catalysts of Examples 1 to 3 were larger than those of the carbon catalysts of Examples C1 and C3, and smaller than that of the carbon catalyst of Example C5. The crystallite sizes La of the carbon catalysts of the Examples 1 to 3 were smaller than those of the carbon catalysts of Examples C2, C3, and C5.

The BET specific surface area (S_{BET}) of the carbon catalyst of Example C4 was significantly smaller than those of the carbon catalysts of the other examples. The total pore volumes (Vₐₗₗ) in Examples C3 and C4 were smaller than those of the carbon catalysts of the other examples. The carbon catalyst of Example C2 had a micropore volume (V_{micro}) larger than those of the carbon catalysts of the other examples. In contrast, the carbon catalyst of Example 3 had a total pore volume (Vₐₗₗ) and mesopore volume (Vₘₑₛₒ) larger than those of the carbon catalysts of the other examples.

The carbon catalyst of Example C3 had an iron atom concentration (at%) and a nitrogen atom concentration (at%), which were obtained by XPS, smaller than those of the carbon catalysts of the other examples, and an oxygen atom concentration (at%) larger than those of the carbon catalysts of the other examples.

## Claims

1. A carbon catalyst,
wherein the carbon catalyst has a ratio L/La of an average carbon network plane size L, which is obtained by temperature programmed desorption analysis capable of heating to 1,600°C, to a crystallite size La, which is obtained from a diffraction peak in a vicinity of a diffraction angle (2θ) of 43° in an X-ray diffraction pattern obtained by powder X-ray diffraction using a CuKα ray, of 15 or more,
wherein the carbon catalyst has a BET specific surface area of 100 m²/g or more.

2. The carbon catalyst according to claim 1, wherein the carbon catalyst has the crystallite size La of 10.00 nm or less.

3. The carbon catalyst according to claim 1, wherein the carbon catalyst has the average carbon network plane size L of 5 nm or more.

4. The carbon catalyst according to claim 1, wherein the carbon catalyst comprises a nitrogen atom.

5. The carbon catalyst according to claim 1, wherein the carbon catalyst comprises a non-noble metal.

6. An electrode, comprising the carbon catalyst of any one of claims 1 to 5.

7. A battery, comprising the electrode of claim 6.
